# EUROPEAN PATENT APPLICATION

(11) **EP 0 605 106 A1**
(43) Date of publication of application: **06.07.1994**
(21) Application number: 93309546.5
(22) Date of filing: 30.11.1993
(51) Int. Cl.: G06F 1/00

(54) **Computer security metapolicy system**

(30) Priority: 03.12.1992 US 985845
(71) Applicant: DATA SECURITY, INC., Bedford, Massachusetts 01730 (US)
(72) Inventor: Hosmer, Hilary H., Bedford, Massachusetts 01730 (US)
(74) Representative: Jones, Graham H.

(57) **Abstract**

A computerized method of processing a request subject to conflicting policies including storing on computer storage media various policies responsive to attributes and a metapolicy function including rules for deciding conflicts between policies; receiving by a computer input device a request subject to one or more of the policies; automatically determining which policies apply to the request and which attributes are relevant to the policies; processing each policy which applies to the request to decide a policy result in response to the request according to the attributes; and applying the metapolicy rules to the policy results for resolving any conflict in determining which policy result prevails.

## Description

### FIELD OF INVENTION

This invention relates to a computerized method of processing a request subject to conflicting policies using a metapolicy function responsive to conflicting policy results.

### BACKGROUND OF INVENTION

The literature is replete with documented requirements for multiple policy systems. For example, multiple policy security systems are needed whenever there is more than one security goal, such as confidentiality, privacy, availability, and integrity; the system must serve multiple independent parties each with individual priorities and values; the system is composed of separately developed and evaluated pieces, each with its own security policy or policies; and/or the policies must be amenable for adaption to changing situations.

A policy is best defined as a set of constraints established by an accepted authority to facilitate group activity so that chosen goals can be achieved. Policies may require and are responsive to data or attributes in order to arrive at a policy result. For example, a security policy such as "No user may read data at a higher classification level than the user's clearance level," includes the attributes of "user clearance level," and "data classification level," both of which must be known or, on a computer system, be given a value before a decision can be made according to the policy.

The main problem with multiple policy systems is that individual policies may conflict with one another: employee privacy often conflicts with the corporate need for intrusion detection; the Freedom of Information Act may conflict with the Privacy Act and with military requirements for confidentiality. Laws governing the disclosure of medical information may conflict, for example the laws pertaining to disclosure of the names of those who have taken Aids or HIV tests may vary from state to state. If a patient from Connecticut, with an insurance company in Ohio is hospitalized in New York, it may be difficult to determine which state's disclosure policies apply. All the states' disclosure policies may apply, the most restrictive states' disclosure policies may apply, the patient's choice may be determinative, the doctor's choice may be determinative, or the law in the state where the data is stored may trump both the patient's and the doctor's choice.

Automated security policies may have inherent conflicts as well. A technique for improving data confidentiality avoiding covert signalling channels in relational data bases may require compromises of integrity. Hence, the confidentiality policy and the integrity policy may come into unavoidable conflict. And, it may not be known a priori which policy will be more important to a given customer. Only the relevant authorities know which policies should be emphasized, and that is subject to change. In peace, confidentiality is critical, but in war, integrity may become more important. Integrated multiple, sometimes contradictory security policies on today's multilevel secure computer systems is a difficult, sometimes impossible problem. When the security policies themselves cannot be integrated, the systems built to integrate these policies cannot be integrated either.

Current systems are designed according to the Trusted Computer System Evaluation Criteria (TCSEC) which embodies the United States security paradigm. It bundles functional capabilities like mandatory access control, and assurance activities like producing a formal security policy model, into a limited number of clusters each with a level number attached. The TCSEC assumes a "system security policy" applies to everything in the system. It focuses on confidentiality, which often does not meet the needs of non-Department of Defense users. The system's security policy can be divided into major subpolicies such as confidentiality, integrity, and assurance of service. The subpolicies are further subdivided. For example, confidentiality can be divided into access control and non- access control policies, and access control policies can be subdivided into mandatory access control and discretionary access control. However, the TCSEC paradigm assumes that all these subpolicies cohere together to represent one overall system security policy. The single overall policy drives the choice of security mechanisms and is the foundation of most assurance efforts. The single policy paradigm works well with stand alone systems, but causes problems when systems must be networked or combined and security policy integration is required. For example, when systems with slight variations in policies, such as operating system, database management system, and user applications, must work together, there may be policy integration difficulties as well as other interoperability issues. The same holds true when systems enforcing different policies such as the United States Department of Defense, North Atlantic Treaty Organization (NATO), European Community (EC), and France, must interact and share classified data. Interoperability often requires compromises. For example, the current model for trusted information systems only provides for two kinds of policies: mandatory access control (MAC) policies which specify which user clearances have access to the various levels of classified data; and discretionary access control (DAC) policies which specify who has access to user files. In addition, there may be supporting policies such as Identification and Authorization policies which set forth how users are to identify themselves to the computer system (passwords, etc.).

Unfortunately, the current model allows only one mandatory access control policy and one identification and authorization policy on a given system. And, in cases of conflict, mandatory access control always has priority over discretionary access control. In addition, two different systems may each have a different discretionary access control policies, and a different identification and authorization policies.

The problems with the TCSEC methodology are numerous. First, it's inflexible. If a user wants to modify built-in aspects of the system security policy, the whole system must be reevaluated. Second, exchanging sensitive data with other security policies is difficult or impossible in real time. Guards are needed at all interfaces, and mapping rarely can translate security levels from one policy to the other without upgrading. Third, the TCSEC methodology is not conducive to portability. Policies cannot be ported from one system to another without re-evaluation. Fourth, it's unrealistic. The real world has multiple co-existing security policies. The computer security officer creating an automated security policy must often integrate diverse and contradictory security policies together into a single coherent policy to meet the trusted computer system evaluation criteria. Canada's experience trying to integrate the national privacy policy with the national disclosure policy into a single policy lattice is illustrative of the real difficulties users face in attempting to devise a system incorporating multiple security policies. Finally, performance is poor. Adding security to existing systems seriously slows down throughput.

Sometimes, the only way to solve such problems is to transcend them. Conflicts between policies are inevitable and hence a better system would include a methodology and programming to accept conflicts and then logically resolve them within the system.

### SUMMARY OF THE INVENTION

It is therefore an object of this invention to provide a computerized method of processing a request, subject to conflicting policies, that allows incorporation of more than one security goal, such as confidentiality, privacy, availability, and integrity.

It is a further object of this invention to provide such a computerized method of processing a request, subject to conflicting policies, which serves multiple independent authorities each implementing different individual priorities and values in their policies.

It is a further object of this invention to provide such a computerized method of processing a request, subject to conflicting policies, which allows systems to be composed of separately developed and evaluated pieces, each with its own security policy or policies.

It is a further object of this invention to provide such a computerized method of processing a request, subject to conflicting policies, which facilitates adapting policies to changing situations.

It is a further object of this invention to provide such a computerized method of processing a request, subject to conflicting policies, which is flexible and allows the user to modify the normally built in aspects of the systems security policy without reevaluating the system as a whole.

It is a further object of this invention to provide such a computerized method of processing a request, subject to conflicting policies, in which exchanging sensitive data with systems and with other security policies is possible in real time.

It is a further object of this invention to provide such a computerized method of processing a request, subject to conflicting policies, which does not require the integration of diverse and contradictory security policies together into a single coherent policy.

It is a further object of this invention to provide such a computerized method of processing a request, subject to conflicting policies, which facilitates high performance and minimizes performance degradation.

This invention results from the realization that since it is inevitable that individual policy results will conflict, rather than attempting to mesh separate possibly conflicting policies into a single coherent system security policy, relatively unconstrained modification capability, portability, and enhanced performance can be achieved by separately or co-processing each policy to decide individual and perhaps conflicting policy results; and then subjecting each policy result to a mediation process in which stored metapolicy rules determine which policy result prevails thereby resolving any policy conflicts.

This invention features a computerized method of processing a request subject to conflicting policies. Policies are stored on computer storage media which are responsive to attributes. Also stored is at least one conflict resolution metapolicy including rules for deciding conflicts between policies and perhaps a policy description metapolicy which includes rules for storing policies on the system. A request, received by computer input means may operate on an object such as a file and is subject to one or more of the policies so stored. In this invention, policy codes establish which policies apply to the request. These policy codes also establish which attributes are needed by the policies in order to render a policy decision. Each policy which applies to the request is then processed to decide a policy result and each policy result is applied using one or more programming functions to the metapolicy rules for resolving any conflict and determining which policy result prevails. Determining which attributes are relevant to the request and establishing which policies apply to the request includes a policy enforcer function responsive to the request, the attributes, and the policies for processing the request. Further included may be a policy decider function which is responsive to the policies and the policy enforcer function. Each policy may be ranked, and the rank of each policy may be taken into account for resolving any conflict between policy results.

This invention also features a computerized method of processing a request subject to conflicting security policies on a computer system. A plurality of access control policies are stored on computer storage media and include rules describing which subjects have access to classified levels of data. Also stored on computer storage media is at least one metapolicy function including rules for deciding conflicts between the access control policies. A request, received by computer input means from a subject is dependant on one or more of the access control policies for authorization to process the request. It is then determined which attributes are relevant to the request and which access control policies apply to the request. Each access control policy applicable to the request is processed to decide a policy result in response to the request according to the attributes. Each policy result is then processed under the metapolicy rules for resolving any conflict and determining which policy result prevails. Each access control policy may be stored on computer storage media, such as a read-only memory device, which is portable to other computerized systems.

Finally, this invention features a computerized method of processing a request subject to conflicting security policies in which the attributes of one or more computer users, policies responsive to those attributes, and at least one metapolicy including rules for deciding conflicts between the policies are stored on computer storage media. A request is then received by computer input means from a computer user and processed according to an interface programming function which validates the request. A user programming function is then invoked to determine the attributes applicable to the request. After the request and the attributes applicable to the request are received, a policy enforcer function identifies each policy relevant to the attributes. Thereafter, a plurality of policy decider functions are activated to apply the request to each relevant policy and produce policy results. Each policy result is then applied to the metapolicy for resolving any conflict between the policy results according to one or more metapolicy rules and establishing the metapolicy result. The metapolicy result is then applied to the policy enforcer function which outputs, on computer output means, the metapolicy result.

### DISCLOSURE OF PREFERRED EMBODIMENT

Other objects, features and advantages will occur to those skilled in the art from the following description of a preferred embodiment and the accompanying drawings, in which:
Fig. 1 is a blocked diagram of a computer system that can be used according to this invention;
Fig. 2 is a conceptualized view of the computerized metapolicy system according to this invention;
Fig. 3 is a block diagram of a routine implemented according to the metapolicy system of Fig. 2 on the computer system of Fig. 1;
Fig. 4 is a diagram of a policy label that may be used according to this invention;
Fig. 5 is a more detailed block diagram of the programming functions used to carry out this invention;
Fig. 6 is a block diagram of a policy logic structure according to this invention;
Fig. 7 is a block diagram of the logic for sending policy results to a metapolicy;
Fig. 8 is a schematic diagram of an example of a case statement function of a particular policy function stored on a computer according to this invention;
Fig. 9 is a process flow block diagram of another policy stored on a computer according to this invention;
Fig. 10 is a flow chart block diagram showing the processing of a particular subpolicy according to this invention;
Fig. 11 is a flow chart block diagram showing a metapolicy function and metapolicy rules according to this invention; and
Fig. 12 is a block diagram of a more particular computerized metapolicy system according to this invention.

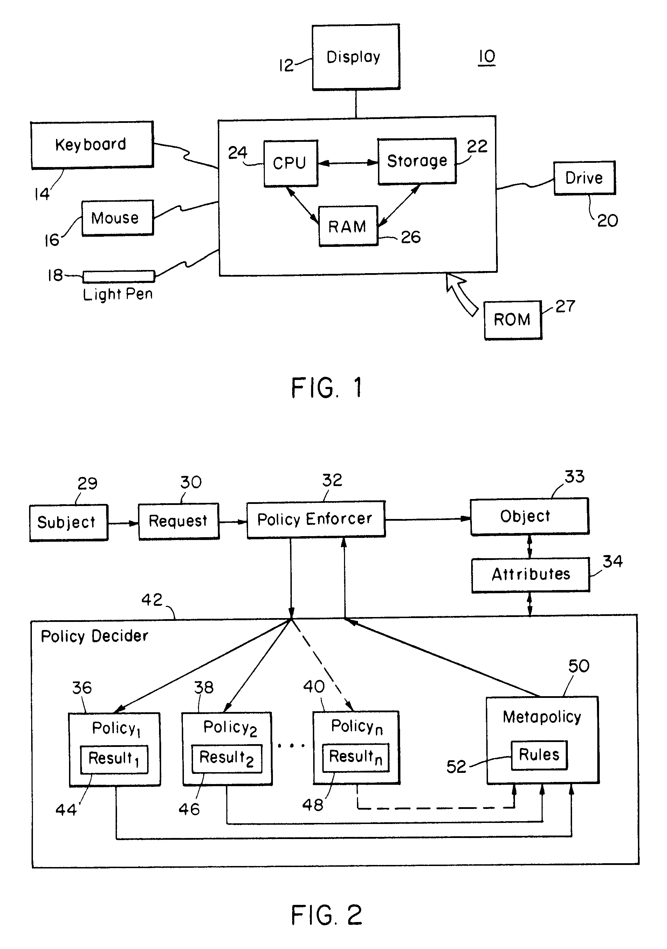

This invention may be accomplished by the appropriate programming of computer 10, Fig. 1, more particularly described below. Computer 10 includes peripherals such as display 12, keyboard 14, mouse 16, light pen 18, and disk or tape drive 20. Permanent storage devices 22 such as hard disk drives, ROM, and the like will contain the programming and databases used to execute the metapolicy system according to this invention including the functions, subroutines, and operating systems herein described. Central processing system 24, interfacing through RAM 26, will control programming flow and operation and also the interface between the programming and the peripheral units. Buffers, databuses, power supplies and the like are also included in computer system 10, but a description of such devices is not necessary to an understanding of this invention.

An object of this invention is to resolve conflicts between automated policies. Hence, computer system 10 could also include the operating programs, databases, and object files affected by the policies and networked with other machines and devices affected by a given policy decision.

As delineated in the background of invention above, policies require known values for various attributes to make a decision. Request 30, Fig. 2, from subject 29 (user) is inputted, for example by keyboard 14, Fig. 1 and received by policy enforcer 32, Fig. 2. For example, subject 29 may seek access to object 33 (file). Appropriate programming stored on storage media 22, Fig. 1 and loaded into RAM 26, evaluates request 30, Fig. 2, to determine which policies apply to the request and which attributes 34 are relevant to the policies and the object 33. For example, subject 29 may have a clearance attribute of "Top Secret" and request access to an object file 33 which has a classified attribute "secret". Policy enforcer 32 then passes onto policy decider 42 attributes and codes indicating which policies apply. Policy₁ 36, policy₂ 38, and so on to policyₙ 40, may apply depending on request 30 and attributes 34. Policy decider 42 then processes each policy which applies to request 30 serially or in parallel to decide a policy result. Hence, corresponding policy result₁ 44, policy result₂ 46, and so on to policy resultₙ 48 are determined.

In this invention, however, policy result₁ 44 may conflict with policy result₂ and/or each of policy result₁ and policy result₂ could conflict with other policies collectively denoted as policyₙ 48. Conflict is allowed because possibly conflicting policy results_{1,2···n} 44, 46, and 48 are applied to metapolicy function 50 which includes rules 52 for deciding between conflicting policy results_{1,2···n} 44, 46, and 48. Processing metapolicy 50, which may also include transmission of attributes 34, by policy decider 42, allows policy enforcer 32 to make a decision whether to honor request 30. Hence, unlike prior art security systems, more than one mandatory access control policy may be present within storage 22 of computer 10, Fig. 1.

To illustrate the interaction of conflicting policies and metapolicies, consider two shipboard passengers who request a marriage at sea. The man, a moslem, is a Kuwait citizen and already has a wife. The woman is an unmarried Christian United States citizen planning to move to Kuwait. The attributes 34 needed by the relevant policies to evaluate the request are the passenger's sex, citizenship, marriage status, and religion. Policy enforcer 32 establishes that religious, national, and maritime policies apply to the request: religious policy₁ states that a Moslem male may take up to 4 wives at a time; religious policy₂ states that a Christian may take only one spouse at a time; national policy₃ states that a man living in Kuwait may take up to 4 wives at a time; and national policy₄ states that an American male or female may take only one spouse at a time. Hence, each policy is responsive to the attributes 34 (sex, citizenship, marriage status, and religion). Each such policy may be stored in a computer database or similar on storage media 22, Fig. 1. The request 30, Fig. 2, (marriage aboard ship) is received by policy enforcer 32, which first established which policies apply to the request, and then determines which attributes are relevant to the request.

In this example, processing the policies according to attributes 34 establishes policy result₁ namely, since a Moslem male has requested marriage and he only has one wife, the request should be honored. Policy result₂, however, would reach a different conclusion, namely since a Christian female is involved, she may not marry someone who already has a spouse. Policy result₃ establishes that since the man resides in Kuwait, he may take up to 4 wives at a time and therefore the request should be honored. Policy result₄, however, establishes that since the woman is an american, the request should not be honored. Hence, there is a conflict between policy₁, policy₂, policy₃, and policy₄. Therefore, each policy result_{1,2,3,4} is submitted to metapolicy 50 which includes rules 52 for determining which policy results prevails. Conflict resolution on storage media 22, Fig. 1, is then attained according to rules 52, of metapolicy 50 stored in a database or similar, as follows: Rule 1 states that if each member of the couple comes from the same country, the laws of the couple's country of citizenship prevails; Rule 2 states that if the marriage is performed on shore, the laws of the land where the marriage is preformed prevails; Rule 3 sets forth that if the marriage is performed outside national boundaries, the law of the land where the couple will reside prevails. In this example, then, two other attributes are needed, namely, the location where the marriage is to be performed, and the location where the couple will reside. Since in this example, the request specified that the marriage is to be performed at sea, outside of national boundaries, the law of the land where the couple will reside (Kuwait) prevails. Hence Rule 1 and Rule 2 are not applicable, but Rule 3 resolves the conflict and policy₃ prevails. Since Rule 3 states that if the marriage is performed outside national boundaries, the law of Kuwait, the country where the couple will reside, prevails. Policy result₃ states that the request is to be honored and accordingly, policy enforcer 32, Fig. 2, displays on display 12, Fig. 1, and affirmation that the request is granted.

The following definitions are useful for a detailed description of the process flow according to this invention. "Policies" are constraints established by an authority to facilitate group activity. Multiple authorities establish multiple policies. For example, the Health Department, the Building Code, State Law, National Law, Federal Acquisition Regulations, Union Contracts, and the company president all establish policies which businesses must follow.

"Security Policies" are policies to protect the people, information and material resources of an organization. For example, to protect military information, the Department of Defense has developed a classification policy with hierarchical levels of classification (e.g. TOP SECRET, SECRET, CONFIDENTIAL, UNCLASSIFIED); multiple compartments; corresponding levels of user clearance; rules for permitting access to data (e.g. The viewer's clearance must dominate the classification); and rules for handling data at every level of classification (e.g. classified data must be in view of the user, or locked in a safe, receipts must accompany transfers of classified documents from one person to another).

"Automated Information System Security Policies" are security policies implemented on a computer system. They usually aim to achieve the goals of confidentiality, integrity, and/or availability. They must be more explicit and detailed than human policies, since they will be implemented by a machine.

"Metapolicies" are policies about policies. They may be rules to resolve conflicts between policies, or they may be information about policies. A metapolicy function includes the programming necessary to receive conflicting policy results and the process these results according to the metapolicy rules.

"Subjects" are active entities in the system. They include people, processes, devices, and other components which initiate action. In Figure 2, subject 29 (person) makes the request 30 (process) which requires mediation by the policy enforcer 32 (process).

"Objects" 33, Fig. 2 are passive entities in a system. They include files, databases, records, devices, and other entities which are acted upon by others. The same entity may be at different times both a subject and an object, depending on whether it is acting upon other entities or being acted upon.

"Attributes" 34, Fig. 2, include the characteristics of both subjects and objects.

"Mediation" is the application of the appropriate policy to the request. Both the subject making the request and the object of the request may be subject to one or more policies, as indicated by their policy codes and attributes. In addition, metapolicies and implicit policies may apply.

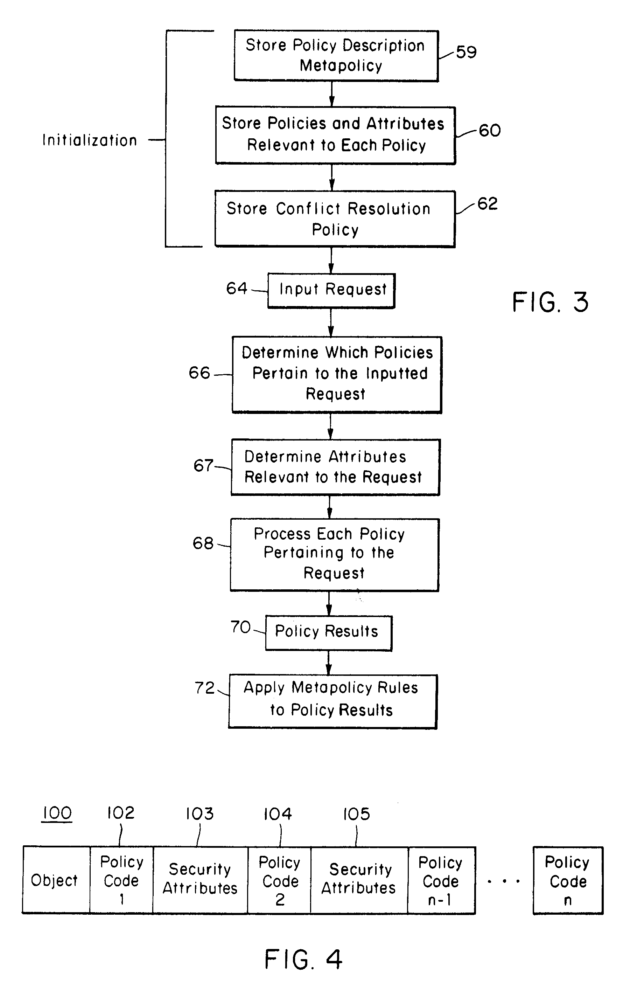

In general, then, the system is initialized by storing any policy description metapolicies 59, Fig. 3, storing the policies and attributes relevant to each policy, step 60, Fig. 3 and conflict resolution metapolicies 62 on computer storage media 22, Fig. 1.

Policies and metapolicy functions may be stored on mass storage devices and loaded into RAM as needed. It is critical that they be tamper proof, so techniques for assuring their integrity are essential. On the mass storage device, configuration management, cryptographic check sums, and standard physical security are necessary. In RAM, techniques for assuring the impossibility of unauthorized modification are necessary. Hardware protection rings, distinct execution levels, and other separation strategies are appropriate.

Alternatively, policies and metapolicies may be stored on Read-Only-Memory (ROM) chips 27, Fig. 1. The policies on ROM may inserted into the system under standard configuration management practice. A combination of these two techniques described is most appropriate. The standard policies would be purchased on ROM chips; custom policies would be stored on mass storage and loaded in to RAM when needed.

The following security policy "No Read Up" may be programmed as follows:
- POLICY NAME:: No Read Up
- EXPIRATION DATE: Indefinite
- POLICY TYPE:: Access Control Subpolicy
- ULTIMATE AUTHORITY:: Secretary of Defense
- LOCAL AUTHORITY:: System Security Officer
- POLICY CHANGE PROCESS:: Consultation with Armed Services

### APPLICATION DOMAIN

This policy applies at all times to all computer systems containing USA military classified data.

### DOMAIN INTERFACES

This policy may relate to NATO and SEATO in accordance with Reg. X.

### INFORMAL STATEMENT OF POLICY

No user or process representing a user may read data at a higher classification level than the user's clearance level.

### EXCEPTION

Users or processes with downgrade privilege are excepted.

### RELATED AUDIT POLICIES

Security-relevant events must be auditable.

Attempted violations must be auditable.

Any violation must be audited and alarmed.

Every use of downgrade privilege must be audited.

### OTHER RELATED POLICIES

Users must identify themselves and be authenticated at login.

### PRECEDENCE RULES

This policy has priority over any other access control policy.

Local System Security Officers may determine priority relative to other kinds of policies.

### FORMAL STATEMENT OF POLICY

- S: Subject: User, process, active entity
- O: Object: File, passive entity
- CR: CleaRance
- CL: CLassification

May_Read (S,O)
Begin
If CR(S)>=CL(O) \check simple security\
then May_Read = YES
Else
If Downgrade(S)=YES \downgrade privilege?\
then May_Read = YES
If Audit (May_Read) = YES
then write audit record.
End

Hence, in this example, policy 36, fig. 3 is stored on storage media 22, or ROM 27 Fig. 1 in the form of a function including "if-then" statements as are known.

A methodology for coding and establishing metapolicies is described by a metapolicy which specifies the policies involved, whether the relationship between the policies is hierarchical or collegial, the importance of the relationship to the security of the system, which policy is executed first, whether they are always executed together, and which policy has precedence (i.e. policy ranking) in the case of conflict as well as the creator of the policy and those authorized to change the relationship. For example:

| **Policy Relationship Metapolicy** | Policy 1 | Policy 2 |
|---|---|---|
| Policy Names | MAC | DAC |
| Relationship (Parent/Child/Colleague) | Colleague | Colleague |
| Execute (With/Before/After/Not) | Before | After |
| Precedence Level in this relationship | 100 | 50 |
| Criticality of relationship | 80 | |
| Creator of relationship | X.Jones | |
| Authorized Modified of relationship etc. | Sec. DOD & SSO | |

In another example, a formal specification language such as ASLAN may be used to provide and specify critical requirements (state invarience), constraints, and many levels of detail from a high level to a low level. ASLAN provides strong typing, proofs, initial conditions, and transitions. An ASLAN example below states a policy that, since patients are not allowed to see their own medical records, for all the medical data that they know, there must be a primary physician or consultant who has informed them.

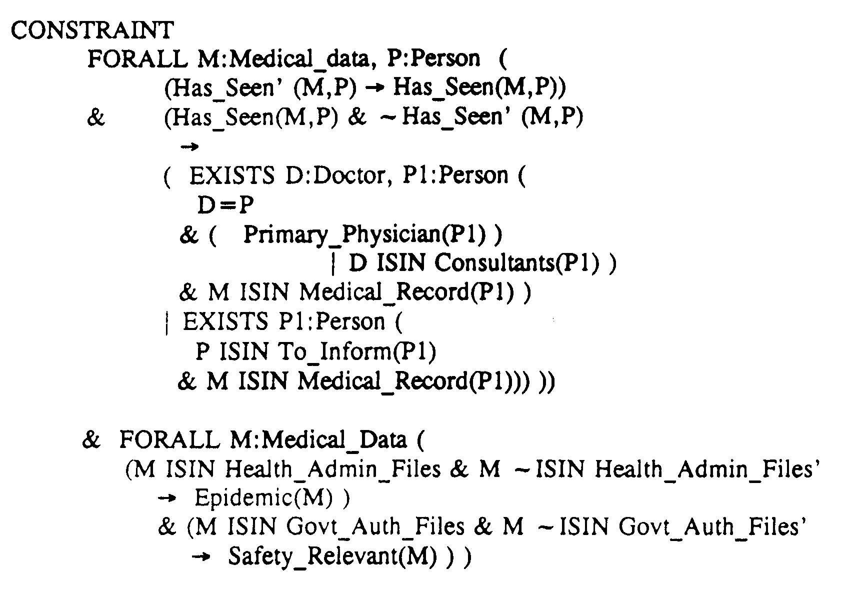

"Metapolicy" as used herein also includes the coding which describes the structure of the policies stored within the system. These types of policy description metapolicies allow individual policies, although hard coded in different formats, to be established, processed, and modified in any format required.

The names of the elements, the structure of the presentation, and the conventions of the policy description (such as both informal and formal policy statements) constitute a framework that gives meaning to the elements of the policy much the way that data description metadata gives meaning to raw data elements in the database world:

| **Policy Description** | **Data Type** | **Length** | **Criticality** | **Reg. Signer** | **Modifier** |
|---|---|---|---|---|---|
| Policy Name | Alphanumeric | 20 | 30 | Caliphs | SSO |
| Policy Type | Alphanumeric | 5 | 30 | Caliphs | SSO |
| Authority | Alphanumeric | 30 | 50 | Caliphs | SSO |
| Start Date | Date | 6 | 20 | Caliphs | SSO |
| Expiration Date | Date | 6 | 25 | Caliphs | SSO |
| Informal Model | Alphanumeric | 900 | 20 | Caliphs | SSO |
| Formal Model etc. | ZED | 1500 | 40 | Caliphs | SSO |

Returning to the processing flow according to this invention, a transaction request is then entered, step 64 and it is determined which policies apply to the request step 66, and which attributes are relevant to the request. As discussed above, each policy is then processed, step 68 to determine the individual policy results, step 70.

Several techniques may be utilized according to this invention for processing each policy including so called communicating sequential processes which permit both parallel and sequential processing with communication between executing processes. In this way, the distinct policies could be executed serially in paths with decisions and branches, or in parallel. Only the policy results and ranking results, if any, from the policy decision process are combined with the conflict-resolution metapolicy. In this way, individual policies are porable, i.e. they can be copied on to or transferred between different machines. Applying the metapolicy rules to these policy results, step 72, results in the resolution of any conflict between the individual policies thereby determining which policy prevails as described above.

There are numerous known methods for entering and storing attributes. One such methodology includes the use of a general format label 100, Fig.4, with policy domain codes 102 and 104 and associated security attributes 103 and 105. An example would appear as: "Patient/John Jones/100101/Privacy-NY" meaning that "the New York privacy policy will be enforced on hospital patient John Jones' records, and the coded bits representing Jones' data release permissions will be interpreted in the New York privacy format." Alternatively, if an object comes under control of more than one policy, a set of attributes is needed for each policy. For example, an object which is in both Canadian and US security policy domains would need two sets of policy domain codes and policy attributes, one for the US policies and one for the Canadian policies. To preserve the intuitive notion that each object has only one security label, each set of attributes will be implemented as a label segment accompanied by a policy domain code thus:
Patient/John Jones/010011/Privacy-Mass/010010/Privacy-Conn/110010/Privacy-NY
for patient John Jones, who lives in Connecticut, is hospitalized in New York and then sent for consultation to a teaching hospital in Massachusetts. This methodology provides for a policy code for each policy and attributes for each policy in a tamper-proof security label associated, although not always necessarily attached to, the object.

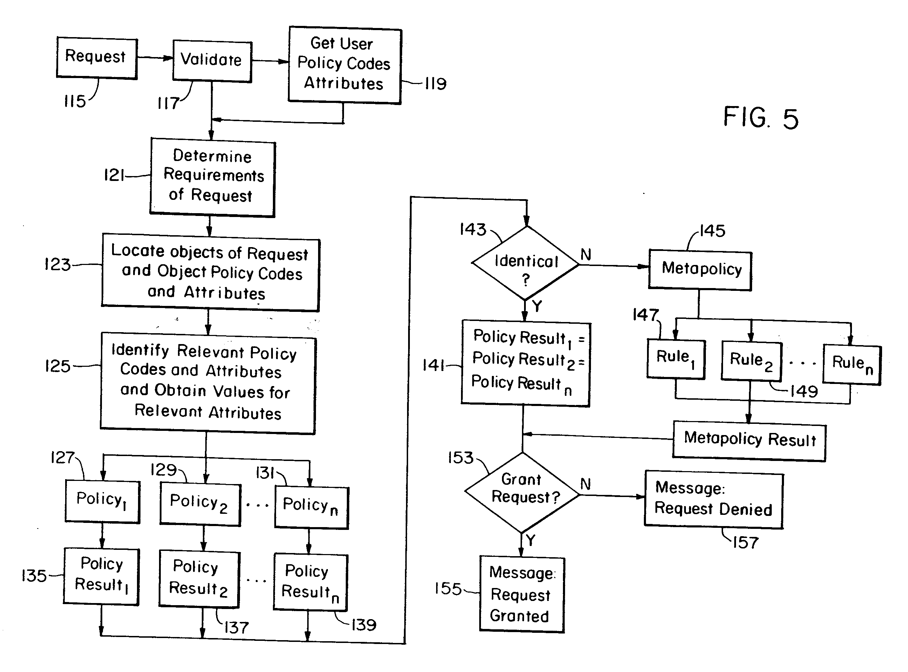

In a more specific implementation, then request 115, Fig. 5, is inputted, and validated, step 117, by an interface function which also provides the user policy code attributes step 119 to the policy enforcer, 32, Fig. 2, which in turn determines the requirement of the inputted request, step 121, Fig. 5, and locates the objects of the request, and their policy codes and attributes step 123. After all the relevant policy codes and attributes are identified, and values are assigned for the attributes step 125, the request is applied to policy₁, step 127, policy₂, step 129 and so one to policyₙ, step 131. Each policy result, namely policy result₁ step 135, policy result₂ step 137, and so on to policy resultₙ step 139 is processed and a determination is made whether each policy result is identical. If so, policy result₁ = policy result₂ = policy resultₙ, step 141 and there is no conflict. Otherwise, it is determined there is a conflict, step 143 and each policy result is processed through the metapolicy function, step 145, which processes all conflicts according to rule₁ step 147, rule₂ step 149, and so in to ruleₙ, producing metapolicy result 152. A determination is then made, whether to grant the request, step 153 and if so a message or response is supplied indicating the request is granted, step 155; otherwise, a message or response is supplied indicating the request is denied step 157.

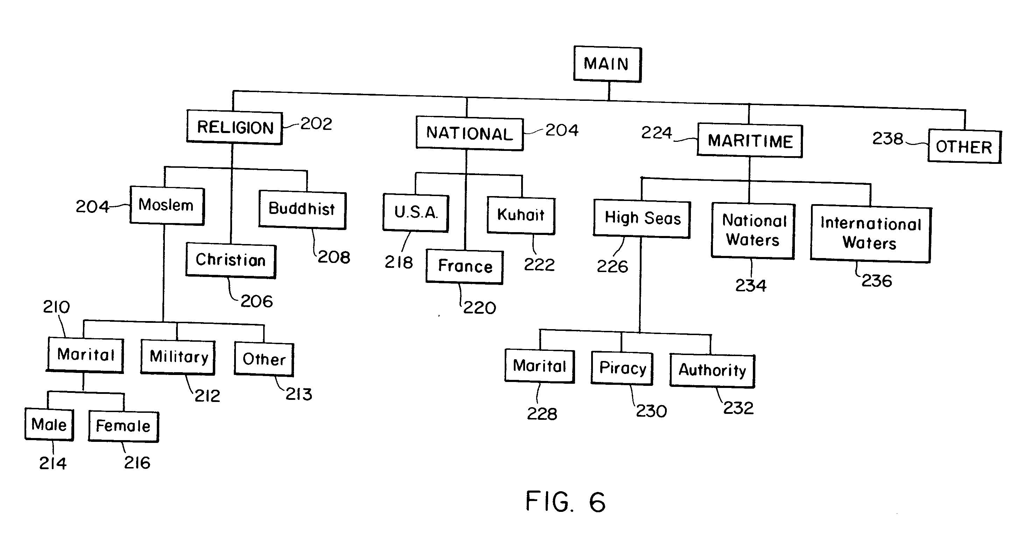

Policy logic structure 200, Fig. 6, according to this invention is hierarchial as shown and for the example used above includes religious policy 202 comprising Moslem policy 204 Christian policy 206 and Buddhist policy 208 as well as other possibilities (not shown). Moslem policy 204, in turn, includes marital policy 210, military policy 212, as well as other policies collectively shown at 213. Marital policy 210 includes male policy 214, and female policy 216. National policy 204 which, as explained above may conflict with religious policy 202, comprises United States national policies 218, French policies 220, and Kuwait policies 222. Maritime policy 224, includes high seas policies 226 which further includes marital policies 228, piracy policy 230, and an authority policy 232. Maritime policy 224 may also include national waters policy 234 and international water policy 236. There may also be other policies 238.

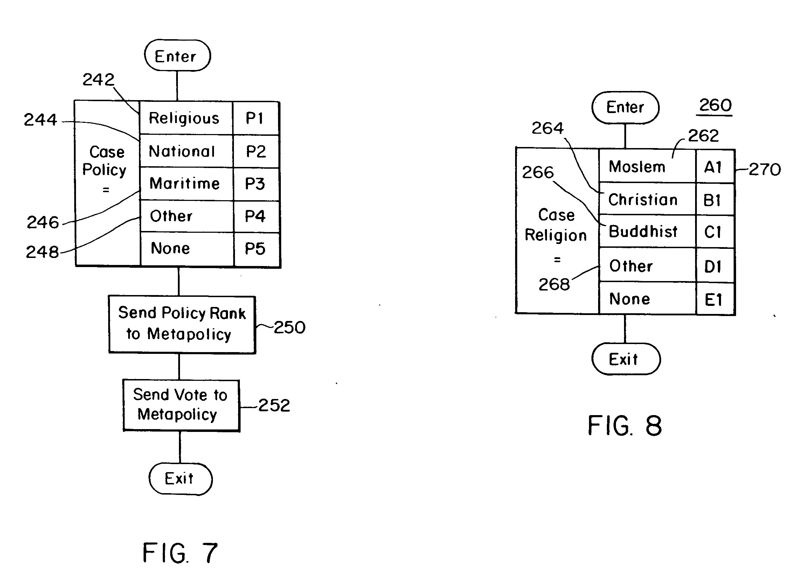

Policy decider function 240, Fig. 7, shown in case statement format, applies each policy relevant to the request, such as religious policy 242, national policy 244, maritime policy 246, as well as other polices collectively denoted as other policy 248. In step 250, each policy rank is sent to the metapolicy, and each policy vote is set to the metapolicy, step 252.

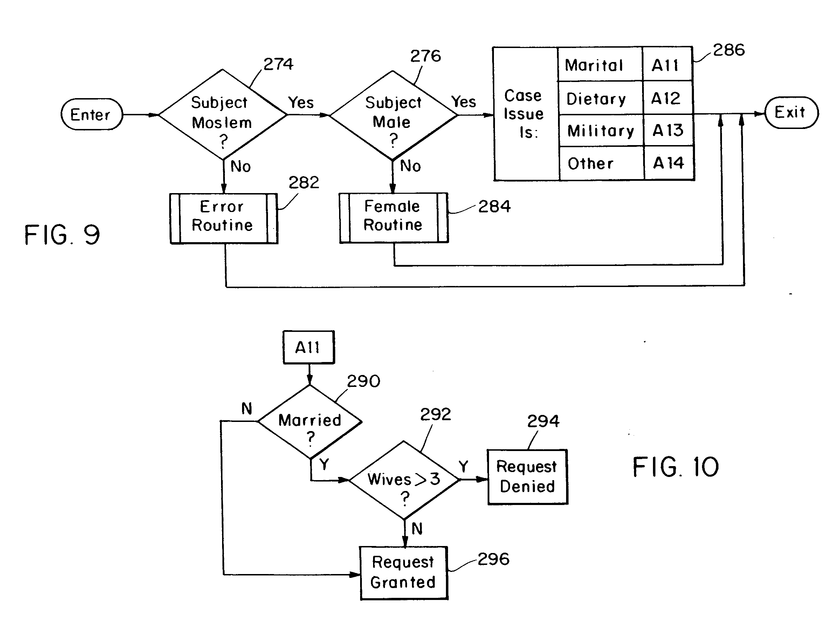

The vote of religious policy 242, for example, is established by policy decider function 260, Fig. 8, also shown in case statement format, in which Moslem policy 262, Christian policy 264, Buddhist policy 266, and other policies collectively denoted as other policy 268 are activated. For example, when one attribute relevant to the request is the Moslem religious policy 262, rules A1, 270 are processed to determine a policy result. In the above example, rules A1 is shown for Moslem policy 272, Fig. 9 for producing a policy result. If the subject is a Moslem, step 274 and if the subject is male, step 276, case statement 278 then queries whether a marital policy is involved, step 280. If the subject is not Moslem, an error routine is invoked, step 282 or if the subject is female, a different routine is invoked, step 284 involving another case statement (not shown).

In the above example, however, the subject is Moslem and a male and therefore marital policy 280 drives the processing of rules A11, 286. Rule A11, Fig. 10, is processed by first determining whether the subject is married, step 290 and whether the subject already has four wives, step 292. If so, the request is denied, step 294, but if not, the request is granted, step 296.

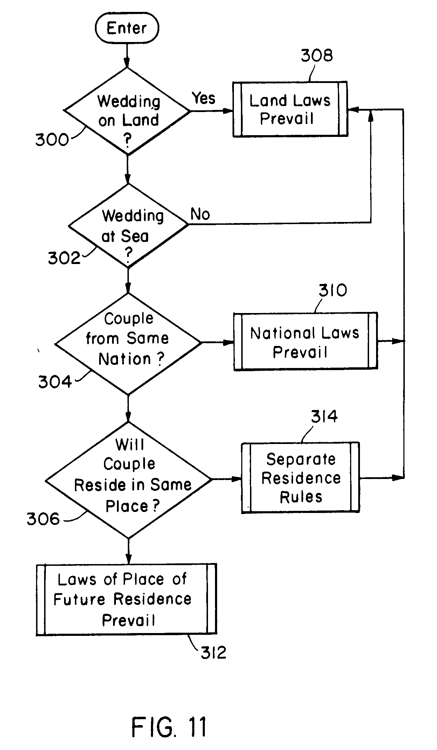

Metapolicy processing flow, Fig. 11, is implemented using "if-then" programming constructs wherein it is first determined whether the wedding is to be held on land, step 300, whether the wedding is to be held at sea, step 302, whether the couple comes from the same nation, step 304, and whether the couple will reside in the same location, step 306. If the wedding is to be held on land, then the laws of the land where the wedding will be held prevails, step 308. If the wedding is to be held at sea and the couple are from the same nation, then the national laws of that nation prevail, step 310. If, however, the wedding is to be preformed at sea and the couple will reside at the same place, the national laws of the couple's residence apply, step 312. Otherwise, separate residential polices will apply, step 314.

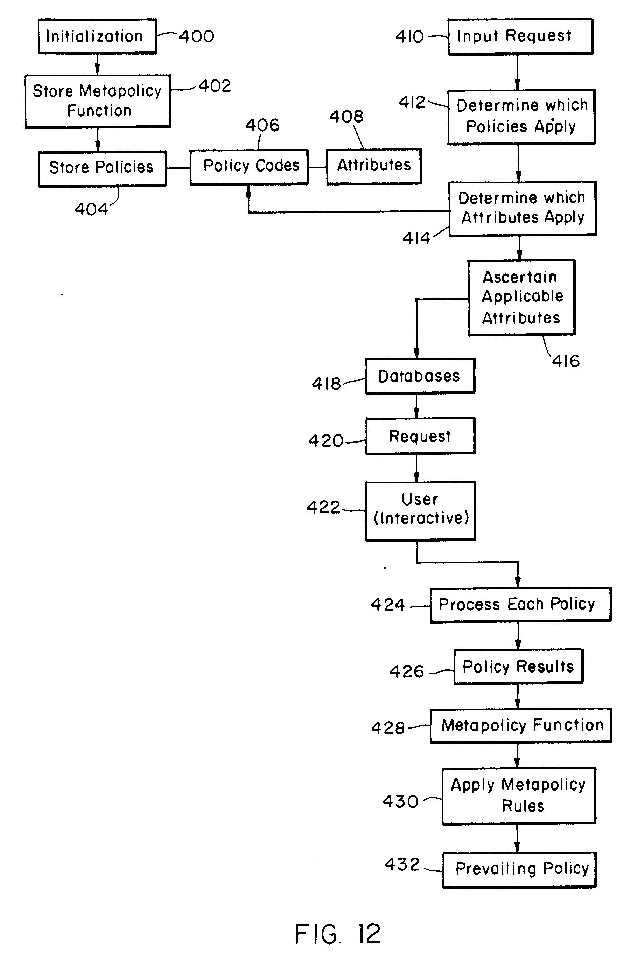

In general then, each system is initialized, step 400, Fig. 12, wherein at least one metapolicy function is stored, step 402 as discussed above. Also, the policies are stored, step 404 as well as the relevant policy codes 406 and attributes 408.

Upon receipt of an input request, step 410, it is determined which policies apply, step 412. Since each policy will have a policy code, the attributes which apply are determined, step 414 by interfacing with the policy codes 406, for example, according to the methodology shown in relation to Fig. 4. Once the attributes which are needed to process the given policy are determined, values for those attributes must be ascertained, step 416. This may be accomplished by searching attribute, object, or subject data bases, step 418, looking at the request itself for an indication of user attributes, step 420, or querying the user using known interactive programming, step 422. Once each applicable attribute has a value, each policy is processed, step 424 to produce individual policy results, step 426. Each policy result is then applied to the metapolicy function, step 428 and the metapolicy rules are applied step 430. The metapolicy rules, as discussed above, decide among conflicting policies which policy prevails, step 432.

Although specific features of the invention are shown in some drawings and not others, this is for convenience only as some feature may be combined with any or all of the other features in accordance with the invention.

Other embodiments will occur to those skilled in the art and are within the following claims:

## Claims

1. A computerized method of processing a request, subject to conflicting policies, comprising:
storing, on computer storage media, policies responsive to attributes, and at least one metapolicy function including rules for deciding conflicts between policies;
receiving, by computer input means, a request subject to one or more said policies;
automatically establishing which policies apply to the request and determining which attributes are relevant to said applicable policies;
processing each policy which applies to the request to decide a policy result in response to said request according to said attributes; and
submitting said policy results to said metapolicy function and applying said metapolicy rules for resolving any conflict and determining which policy result prevails.

2. The method of claim 1 in which said request is for access to an object which refers to policy codes.

3. The method of claim 2 in which determining which attributes are relevant to the request and establishing which policies apply to the request includes a policy enforcer function responsive to said object, and said policy codes for processing the request.

4. The method of claim 2 in which processing each policy includes a policy decider function responsive to said policies and said policy enforcer function.

5. The method of claim 1 in which said stored policies include a policy rank.

6. A computerized method of processing a request subject to conflicting security policies on a computer system comprising:
storing on computer storage media, a plurality of access control policies which include rules delineating which subjects have access to classified levels of data;
storing, on computer storage media, at least one metapolicy function including rules for deciding conflicts between said access control policies;
receiving, by computer input means, a request from a subject dependant on one or more said access control policies for authorization to process said request;
establishing which access control policies apply to the request and determining which attributes are relevant to the policies;
obtaining values for said attributes;
processing each said access control policy which applies to the request to decide a policy result in response to said request according to said attribute values;
submitting said policy results to said metapolicy function and applying said metapolicy rules for resolving any conflict and determining which policy result prevails.

7. The computerized method of processing a request of claim 6 in which a said access control policy is stored on storage media which is portable to other computerized systems.

8. The computerized method of processing a request of claim 7 in which said storage media is a read only memory device.

9. A computerized method of processing a request subject to conflicting security policies comprising:
storing, on computer storage media, attributes of one or more computer users, policies responsive to said attributes, and at least one metapolicy function including rules for deciding conflicts between said policies;
receiving, by computer input means, a request from a said computer user;
processing, according to an interface programming function, said request including validating said request;
invoking a user programming function to determine the attributes applicable to the request;
receiving from said user programming function, the request and said attributes applicable to the request, and identifying, according to a policy enforcer function, each said policy relevant to said attributes;
activating a plurality of policy decider functions each applying a said relevant policy to the request and each producing a policy result;
submitting said policy results to said metapolicy function and applying said metapolicy rules for resolving any conflict between said policy results according to one or more metapolicy rules, and establishing a metapolicy result;
applying said metapolicy result to said policy enforcer function and outputting, on computer output means, said metapolicy result.

10. A method of processing a plurality of policies in a computerized policy system comprising:
initializing the system including storing on computer storage media a metapolicy function having rules for deciding conflicts between policies and storing a plurality of policies and policy codes for each said policy, each said code having attributes the values of which must be known for policy processing;
receiving, by computer input means, a system transaction request subject to one or more said policies;
establishing which said policies apply to said transaction request and determining which said policy codes attributes are needed for processing said applicable policies;
determining a value for each said required policy code attribute;
processing each said policy which applies to said transaction request according to said attribute values to determine a policy result for each said applicable policy;
submitting said policy results to said metapolicy function and applying said metapolciy rules to said policy results for resolving any conflict and determining which said applicable policy prevails.

11. The method of claim 10 in which storing said policies further includes establishing a policy rank for each said policy.

12. The method of claim 11 in which said metapolicy function rules are responsive to said policy rank.

13. The method of claim 10 in which said computer storage media includes a portable media for said stored policies.

14. The method of claim 10 in which a number of said policies include access and integrity control policies for establishing system security.

15. The method of claim 14 in which said system further includes objects subject to said access and integrity control policies.

16. The method of claim 15 in which said system transaction request is a request for access to a said object.
